# EUROPÄISCHE PATENTSCHRIFT

(11) **EP 3 733 572 B1**
(45) Veröffentlichungstag und Bekanntmachung des Hinweises auf die Patenterteilung: **16.06.2021**
(21) Anmeldenummer: 20165911.7
(22) Anmeldetag: 26.03.2020
(51) Int. Cl.: B65G 47/91, B25J 15/06

(54) **FLÄCHENSAUGGREIFER**
AREA SUCTION GRABBER
PRÉHENSEUR DE VENTOUSE PNEUMATIQUE

(30) Priorität: 26.04.2019 DE 102019110913
(43) Veröffentlichungstag der Anmeldung: 04.11.2020
(73) Patentinhaber: J. Schmalz GmbH, 72293 Glatten (DE)
(72) Erfinder: Schneider, Fabian, 72285 Pfalzgrafenweiler (DE); Bienger, Daniel, 78737 Fluorn-Winzeln (DE)
(74) Vertreter: DREISS Patentanwälte PartG mbB

(56) Entgegenhaltungen:
- EP-A2- 0 657 373
- DE-A1- 2 324 742
- DE-U1- 9 307 335
- US-A1- 2006 082 172

## Beschreibung

Die Erfindung betrifft einen Flächensauggreifer zum Ansaugen und Handhaben von Gegenständen gemäß dem Oberbegriff des Anspruchs 1.

Solche Flächensauggreifer weisen eine flächig ausgedehnte, meist ebene Saugfläche mit einer Vielzahl von Saugstellen auf und finden z.B. zur Handhabung von großflächigen Gegenständen Verwendung. Außerdem können Flächensauggreifer dazu eingesetzt werden, eine Mehrzahl von nebeneinander angeordneten Gegenständen gleichzeitig aufzunehmen und einer Handhabung zuzuführen. Die Objekte werden dann nebeneinander an der ausgedehnten Saugfläche angesaugt und so fixiert.

Aus der DE 10 2009 043 043 B4 ist ein Flächensauggreifer bekannt, bei dem die Saugstellen in Saugstellengruppen unterteilt sind und die Saugstellengruppen über jeweilige Saugkammern unabhängig voneinander mit Unterdruck beaufschlagt werden können. Dies ermöglicht es, nebeneinander angeordnete Gegenstände selektiv und kontrolliert zu greifen, ohne umliegende Gegenstände mit aufzunehmen. Die bekannten Lösungen sind komplex aufgebaut, was regelmäßig zu einer aufwändigen Montage und einem erhöhten Aufwand für Wartung führt.

Aus der DE 23 24 742 A1 ist der Oberbegriff des Anspruchs 1 bekannt.

Die Aufgabe der vorliegenden Erfindung besteht darin, einen Flächensauggreifer zuverlässig betreibbar und mit geringem Montageaufwand herstellbar auszugestalten. Außerdem soll der erforderliche Wartungsaufwand des Flächensauggreifers verringert werden.

Diese Aufgabe wird durch einen Flächensauggreifer mit den Merkmalen des Anspruchs 1 gelöst.

Der Flächensauggreifer umfasst einen Greifergrundkörper mit einer Saugseite und einer Oberseite, welche der Saugseite abgewandt ist. Insofern begrenzen die Saugseite und die Oberseite vorzugsweise den Greifergrundkörper in entgegengesetzten Richtungen.

Die Saugseite weist eine Vielzahl von Saugstellen auf, welche zum Ansaugen eines Gegenstands mit Unterdruck beaufschlagbar sind. Die Saugstellen sind vorzugsweise als Saugöffnungen in der Saugseite ausgebildet. Die Saugseite kann mit einem elastischen Belag, z.B. Schaum, oder einem Schutzbelag versehen sein, welcher entsprechende Öffnungen für die Saugstellen aufweist. Die Saugstellen können aber auch jeweils mit separaten Saugköpfen (z.B. Elastomer-Sauger, Saugglocken, Faltenbalgsauger) oder sonstigen Sauggreifvorrichtungen besetzt sein.

Die Saugstellen können gruppiert angeordnet sein und insofern teilweise unterschiedliche Abstände zueinander aufweisen. Vorteilhaft kann aber auch sein, wenn die Saugstellen gleichmäßig an der Saugseite verteilt angeordnet sind, z.B. arrayartig. Dies ermöglicht es, bei Bedarf über die Saugseite eine gleichmäßige Saugkraft bereitzustellen.

Jeweils eine festgelegte Anzahl von Saugstellen ist zu einer Saugstellengruppe zusammengefasst. Die Saugstellen sind insbesondere dadurch zusammengefasst, dass jeweils nur die zusammengefassten Saugstellen in eine jeweils zugeordnete Saugkammer einmünden, wie nachfolgend noch näher beschrieben. Die in einer Saugstellengruppe zusammengefassten Saugstellen sind insbesondere unmittelbar benachbart zueinander an der Saugseite angeordnet. Vorzugsweise sind die Saugstellen einer Saugstellengruppe als insbesondere gerade verlaufende Saugstellenreihe an der Saugseite des Greifergrundkörpers angeordnet, wobei die Saugstellenreihe vorzugsweise längs oder quer zu einer Längserstreckung des Greifergrundkörpers ausgerichtet ist.

Der Flächensauggreifer umfasst ferner eine der Anzahl von Saugstellengruppen entsprechende Anzahl von Saugkammern, wobei jeder Saugkammer eine Saugstellengruppe zugeordnet ist. Die Saugstellen der jeweiligen Saugstellengruppe münden in die jeweilige Saugkammer ein. Insofern sind die Saugstellen einer jeweiligen Saugstellengruppe über die jeweilige Saugkammer miteinander strömungsverbunden und mit Unterdruck beaufschlagbar.

Der Flächensauggreifer umfasst ferner eine Verteilerkammer, welche insbesondere mit einer Unterdruckversorgung verbindbar ist. Zu diesem Zweck kann der Greifergrundkörper wenigstens einen Unterdruckanschluss aufweisen, über welchen die Verteilerkammer evakuiert werden kann.

Die Verteilerkammer weist eine Mehrzahl von Verteilerkammeröffnungen zur Unterdruckversorgung der Saugkammern auf. Insbesondere entspricht die Anzahl der Verteilerkammeröffnungen genau der Anzahl von Saugkammern und jede Verteilerkammeröffnung ist jeweils genau einer Saugkammer zugeordnet. Denkbar ist aber auch, dass eine größere Anzahl von Verteilerkammeröffnungen vorgesehen ist, wobei einer Saugkammer jeweils eine oder mehrere Verteilerkammeröffnungen zugeordnet sind, z.B. um stärkere Strömungen zuzulassen. Eine Verteilerkammeröffnung ist einer Saugkammer dadurch zugeordnet, dass die Verteilerkammeröffnung mit einer jeweiligen Saugkammeröffnung der ihr zugeordneten Saugkammer strömungsverbunden ist. Insofern sind die Saugkammern über die Verteilerkammer mit Unterdruck beaufschlagbar. Vorzugsweise ist somit lediglich ein Unterdruckanschluss an der Verteilerkammer erforderlich, um den Flächensauggreifer mit Unterdruck zu betreiben. Insbesondere sind keine separaten Unterdruckanschlüsse an den Saugkammern erforderlich. Es ist auch möglich, dass mehrere Verteilerkammern vorgesehen sind, wobei einer jeweiligen Verteilerkammer jeweils eine Teilmenge der Saugkammern zugeordnet ist.

Der Flächensauggreifer weist ferner eine Mehrzahl von Ventilen auf, wobei jeder Saugstellengruppe ein Ventil zugeordnet ist, um die Saugstellen der Saugstellengruppe kontrolliert aktivieren und deaktivieren zu können. Jedes Ventil weist einen Ventilkanal und eine Sperreinrichtung zum Sperren oder Freigeben des Ventilkanals auf. Durch Sperren oder Freigeben des Ventilkanals können die Saugkammern selektiv mit Unterdruck beaufschlagt werden, sodass die jeweiligen Saugstellengruppen unabhängig voneinander aktiviert oder deaktiviert werden können. Dies ermöglicht es, nebeneinander liegende Gegenstände unabhängig voneinander anzusaugen und zu handhaben.

Die Ventile sind jeweils als Ventilmodule mit einem eigenen Ventilgehäuse ausgebildet. Insbesondere umschließt das Ventilgehäuse den Ventilkanal und die Sperreinrichtung. Vorzugsweise verläuft der Ventilkanal vollständig in dem Ventilgehäuse.

Die Verteilerkammeröffnungen und die Saugkammeröffnungen münden separat voneinander und insbesondere auch beabstandet voneinander in die Oberseite des Greifergrundkörpers ein. Insbesondere ist eine jeweilige Verteilerkammeröffnung mit der ihr zugeordneten Saugkammeröffnung über einen Verbindungskanal strömungsverbunden. Ein jeweiliger Verbindungskanal ist dabei durch den Ventilkanal des jeweiligen Ventils gebildet, und zwar insbesondere derart, dass der Verbindungskanal vollständig von dem Ventilkanal des Ventils bereitgestellt ist.

Die Verteilerkammeröffnungen und die Saugkammeröffnungen sind jeweils einander räumlich zugeordnet, gruppiert an der Oberseite angeordnet. Dabei sind jeweils Paare umfassend eine jeweilige Verteilerkammeröffnung und die ihr zugeordnete Saugkammeröffnung so positioniert, dass sie durch den Ventilkanal des jeweiligen Ventilmoduls, das an der Oberseite angeordnet ist, miteinander strömungsverbunden sind.

Dadurch, dass die Verteilerkammeröffnungen und die Saugkammeröffnungen in die Oberseite des Greifergrundkörpers einmünden, können die Ventile an der Oberseite des Greifergrundkörpers angeordnet sein. Dort können die Ventilmodule auf einfache Weise, bspw. über eine Schraub- oder Steckverbindung, montiert werden. Darüber hinaus ist bei einer solchen Ausgestaltung auch in einem montierten Zustand des Flächensauggreifers ein freier Zugang zu den Ventilen möglich, sodass die Ventile bspw. im Rahmen einer Wartung des Flächensauggreifers auf einfache Weise ausgetauscht werden können. Hierdurch kann der Wartungsaufwand bei dem Flächensauggreifer verringert werden.

Dadurch, dass die Verbindungskanäle im Wesentlichen durch die Ventilkanäle gebildet sind, müssen die Saugkammeröffnungen nicht mehr mittels Schläuchen mit den Verteilerkammeröffnungen verbunden werden. Dies vermeidet, dass Schlauchverbindungen räumlich über den Greifergrundkörper überstehen. Dadurch kann verhindert werden, dass der Greifer an Vorsprüngen anstößt oder verhakt. Außerdem werden Beeinträchtigungen anderer Maschinenteile vermieden, was insbesondere in Großanlagen mit einer Vielzahl von beweglichen Einheiten von Bedeutung ist. Insgesamt können zusätzliche Bauteile eingespart werden, welche die Verteilerkammeröffnungen und/oder Saugkammeröffnungen mit den Ventilen verbinden. Bei einem derartigen Flächensauggreifer sind demnach weniger Schnittstellen (bspw. Schlauchanschlüsse, Fittings, etc.) vorhanden, welche potentielle Schwachstellen im Hinblick auf eine Dichtigkeit des Flächensauggreifers darstellen. Hierdurch wird eine zuverlässige und robuste Betriebsweise des Flächensauggreifers begünstigt.

Ein derartiger Flächensauggreifer kann außerdem energieeffizient und somit vergleichsweise kostengünstig betrieben werden, da die Verbindungskanäle kurz gehalten werden können.

Zudem kann der Wartungsaufwand deutlich verringert werden, da weniger Schnittstellen, bspw. auf eine mögliche Leckage, überprüft werden müssen. Ferner wird durch eine solche Ausgestaltung eine besonders kompakte Bauweise, insbesondere ein geringes Eigengewicht, des Greifergrundkörpers erzielt. Bei einer Verwendung derartiger Flächensauggreifer in automatisierten Bearbeitungsanlagen müssen daher geringere Massen bewegt werden und es kann Energie eingespart werden.

Besonders bevorzugt ist es, wenn ein jeweiliger Verbindungskanal schlauchlos ausgebildet ist. Auf diese Weise kann die zur Montage eines Flächensauggreifers erforderliche Zeit weiter reduziert werden, da ein aufwändiges Verlegen und Abdichten von Verbindungsschläuchen wegfällt. Darüber hinaus ist ein solcher Flächensauggreifer durch die Einsparung des Schlauchmaterials vergleichsweise kostengünstig. Zudem zeichnet sich ein solcher Flächensauggreifer durch eine zuverlässige Funktion und geringen Wartungsaufwand aus, da die in Bezug auf Dichtigkeit regelmäßig fehleranfälligen Schlauchanschlüsse wegfallen.

Das Ventilgehäuse ist an der Oberseite des Greifergrundkörpers anordenbar, insbesondere befestigbar. Insofern sind die Ventile insbesondere außerhalb der Verteilerkammer und der Saugkammer anordenbar. Die Befestigung ist insbesondere derart ausgebildet, dass sie befestigt, gelöst und wieder befestigt werden kann. Es ist beispielsweise denkbar, dass das Ventilgehäuse mittels Befestigungsschrauben mit der Oberseite des Greifergrundkörpers verschraubbar ist. Es ist auch denkbar, dass das jeweilige Ventilgehäuse über eine Schnellspann-Verbindung oder über eine Steckverbindung mit der Oberseite des Grundkörpers lösbar verbindbar ist. Eine derartige modulare Anordnung der Ventile ermöglicht es, den Flächensauggreifer komfortabel zu warten. Bei einer alternativen Ausgestaltung ist es auch möglich, dass die Ventile gemeinsam ein Ventilmodul bilden, welches an der Oberseite des Greifergrundkörpers anordenbar ist.

Eine besonders vorteilhafte Ausgestaltung besteht darin, dass die Verteilerkammeröffnungen in einer Reihe angeordnet sind, wobei die Reihe entlang einer ersten Richtung verläuft. Vorzugsweise ist die erste Richtung längs oder quer zu einer Längserstreckung des Greifergrundkörpers orientiert. Insbesondere verläuft die Reihe der Verteilerkammeröffnungen gerade. Insbesondere sind die Saugkammeröffnungen ebenfalls in einer Reihe angeordnet, welche Reihe zu der Reihe der Verteilerkammeröffnungen versetzt verläuft. Besonders bevorzugt ist es, wenn die Reihe der Saugkammeröffnungen zu der Reihe der Verteilerkammeröffnungen parallel verläuft. Vorzugsweise ist die Reihe der Saugkammeröffnungen in einer zu der ersten Richtung orthogonalen Richtung zu der Reihe der Verteilerkammeröffnungen versetzt angeordnet. Insofern können die Verteilerkammeröffnungen und die Saugkammeröffnungen als Doppelreihe aus paarweise angeordneten Verteilerkammeröffnungen und Saugkammeröffnungen angeordnet sein. Dann können die Ventilmodule als insbesondere gerade verlaufende Reihe an der Oberseite des Greifergrundkörpers angeordnet sein, was eine besonders platzsparende Anordnung der Ventilmodule begünstigt.

Vorzugsweise erstreckt sich die Verteilerkammer entlang der ersten Richtung und die Saugkammern erstrecken sich jeweils entlang einer Richtung, welche zu der ersten Richtung orthogonal orientiert ist. Die Verteilerkammer kann insofern die Saugkammern zumindest abschnittsweise überdecken. Auf diese Weise wird ein besonders kompakter Aufbau des Flächensauggreifers ermöglicht.

Grundsätzlich ist es möglich, dass die Verteilerkammer und/oder die Saugkammern von dem Greifergrundkörper separat bereitgestellt sind. Bevorzugt ist es jedoch, wenn die Verteilerkammer oder die Saugkammern, insbesondere die Verteilerkammer und die Saugkammern, in den Greifergrundkörper integriert sind. Insbesondere sind die Verteilerkammer und/oder die Saugkammern von dem Greifergrundkörper umgrenzt. Insofern können die Verteilerkammer und/oder die Saugkammern beispielsweise durch Hohlräume in dem Greifergrundkörper gebildet sein. Der Flächensauggreifer zeichnet sich dann durch eine besonders kompakte Bauweise auf. Insbesondere kann ein derartiger Flächensauggreifer eine hohe mechanische Belastbarkeit bei geringem Eigengewicht und geringer Bauhöhe aufweisen. Besonders bevorzugt ist es, wenn der Greifergrundkörper als einstückiges und in sich zusammenhängendes Bauteil ausgebildet ist. Beispielsweise ist es denkbar, dass der Greifergrundkörper mittels eines generativen Verfahrens (bspw. 3D-Druck) hergestellt ist.

Ferner ist es bevorzugt, wenn die jeweilige Verteilerkammeröffnung und/oder die jeweilige Saugkammeröffnung als Durchbruch oder Bohrung in dem Greifergrundkörper ausgebildet sind/ist. Eine solche Ausgestaltung ermöglicht eine einfache Fertigung des Flächensauggreifers. Besonders bevorzugt ist es, wenn die Bohrungen bzw. Durchbrüche orthogonal zu der Oberseite des Greifergrundkörpers verlaufen. Dann können die Durchbrüche bzw. Bohrungen auf einfache Weise von oben durch die Oberseite hindurch erfolgen, was den Fertigungsaufwand weiter reduziert.

Ferner ist es bevorzugt, wenn die Verteilerkammer als nutförmige Ausnehmung in der Oberseite des Greifergrundkörpers ausgebildet ist, wobei die Ausnehmung von einer Deckelplatte verschlossen ist. Die Deckplatte bildet dann zumindest abschnittsweise die Oberseite des Greifergrundkörpers. Insbesondere münden die Verteilerkammeröffnungen in die Deckelplatte ein. Eine solche Ausgestaltung ermöglicht eine besonders einfache Fertigung der Verteilerkammer. Es ist möglich, dass die Deckelplatte als von dem Greifergrundkörper separat bereitgestelltes Bauteil ausgebildet ist. Dann kann die Deckelplatte mit dem Greifergrundkörper lösbar verbindbar, bspw. verschraubbar, sein. Es ist auch möglich, dass die Deckelplatte einstückig mit dem Greifergrundkörper ausgebildet ist. Dann kann der Greifergrundkörper bspw. mittels eines generativen Verfahrens (bspw. 3D-Druck) hergestellt sein.

Bei einer alternativen bevorzugten Ausgestaltung ist die Verteilerkammer durch einen Hohlraum eines von dem Greifergrundkörper separat bereitgestellten Verteilermoduls gebildet, welches an der Oberseite des Greifergrundkörpers anordenbar, insbesondere befestigbar, ist. Insbesondere weist das Verteilermodul ein eigenes Modulgehäuse auf, welches die Verteilerkammer umgrenzt. Beispielsweise ist es möglich, dass das Modulgehäuse als extrudiertes oder stranggepresstes Formteil hergestellt ist, wodurch eine vergleichsweise kostengünstige Fertigung erzielt wird. Für eine vereinfachte Montage des Verteilermoduls an dem Greifergrundkörper ist es ferner vorteilhaft, wenn der Greifergrundkörper eine korrespondierende Ausnehmung zur Aufnahme des Verteilermoduls aufweist.

Besonders bevorzugt ist es ferner, wenn das Verteilermodul eine Modulunterseite und eine Moduloberseite aufweist, wobei die Moduloberseite im montierten Zustand des Verteilermoduls zumindest abschnittsweise die Oberseite des Greifergrundkörpers bildet. Insbesondere sind die Verteilerkammeröffnungen als Durchbrüche oder Bohrungen in der Moduloberseite ausgebildet. Insbesondere weist das Verteilermodul eine der Anzahl von Saugkammern entsprechende Anzahl von Durchbrüchen oder Bohrungen auf, welche das Verteilermodul von der Modulunterseite bis zu der Moduloberseite durchsetzen. Die Durchbrüche oder Bohrungen sind insbesondere dazu ausgebildet, im montierten Zustand des Verteilermoduls die Saugkammeröffnungen zu bilden. Insofern münden die Saugkammeröffnungen und die Verteilerkammeröffnungen in die Moduloberseite des Verteilermoduls ein. Die Ventilmodule können dann an der Moduloberseite des Verteilermoduls angeordnet seien. Insofern kann das Verteilermodul mit den Ventilmodulen ein gemeinsames Modul bilden. Ein so modular aufgebauter Flächensauggreifer kann komfortabel gewartet und an verschiedene Einsatzzwecke angepasst werden.

Eine vorteilhafte Ausgestaltung besteht ferner darin, dass das jeweilige Ventil als Elektromagnetventil ausgebildet ist. Der Flächensauggreifer kann dann rein elektrisch angesteuert werden. Hierdurch kann die Montage des Flächensauggreifers erleichtert werden, da beispielsweise aufwändig zu montierende pneumatische Schlauchverbindungen nicht erforderlich sind. Zudem kann das Eigengewicht des Flächensauggreifers weiter reduziert werden.

Die Erfindung wird im Folgenden anhand der Figuren näher erläutert.

Es zeigen:
- Figur 1: skizzierte Darstellung eines Flächensauggreifers in einer perspektivischen Ansicht;
- Figur 2: skizzierte Darstellung des Flächensauggreifers gemäß Figur 1, wobei die Ventile entfernt wurden;
- Figur 3: skizzierte Darstellung eines Details eines Flächensauggreifers in einer teilweise geschnittenen perspektivischen Ansicht; und
- Figur 4: schematische Darstellung der Verbindung einer Verteilerkammeröffnung mit einer Saugkammeröffnung in einer teilweise geschnittenen Ansicht.

In der nachfolgenden Beschreibung sowie in den Figuren sind für identische oder einander entsprechende Merkmale jeweils dieselben Bezugszeichen verwendet.

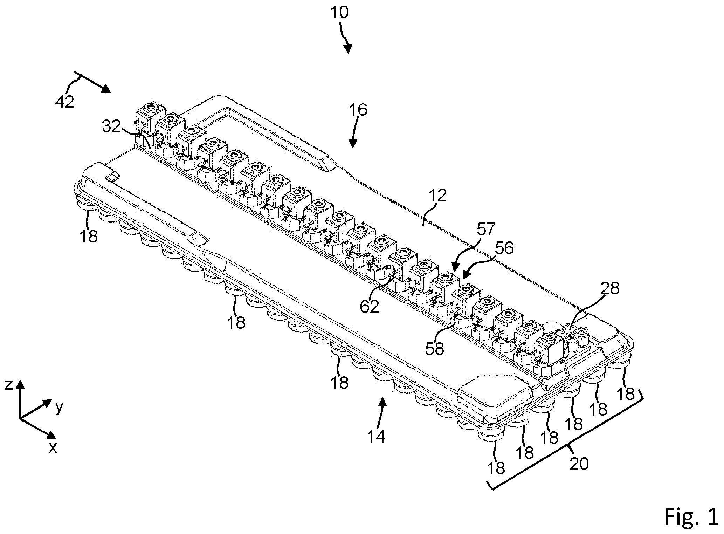

Die Figur 1 zeigt einen in seiner Gesamtheit mit dem Bezugszeichen 10 bezeichneten Flächensauggreifer in perspektivischer Darstellung. Der Flächensauggreifer 10 weist einen insgesamt plattenartigen Greifergrundkörper 12 mit einer Saugseite 14 und einer Oberseite 16 auf, wobei die Oberseite 16 der Saugseite 14 abgewandt ist. Insofern begrenzen die Oberseite 16 und die Saugseite 14 den Greifergrundkörper 12 in entgegengesetzten Richtungen. Zur Erläuterung der geometrischen Verhältnisse ist in den Figuren ist auch ein Koordinatensystem dargestellt, welches zueinander orthogonale Achsen X, Y, Z aufweist.

Die Saugseite 14 weist eine Vielzahl von Saugstellen 18 auf, welche im dargestellten Beispiel als Elastomer-Sauger, insbesondere Faltenbalgsauger, ausgebildet sind. Die Saugstellen 18 sind im dargestellten Beispiel arrayartig in Zeilen und Spalten angeordnet, wobei sich die Zeilen längs zu einer Längserstreckung des Greifergrundkörpers 12 erstrecken (in den Figuren entlang der X-Richtung) und sich die Spalten quer zu der Längserstreckung des Greifergrundkörpers 12 (in den Figuren entlang der Y-Richtung) erstrecken. Die Saugstellen 18 einer Spalte bilden eine Saugstellengruppe 20 (vgl. Figur 1).

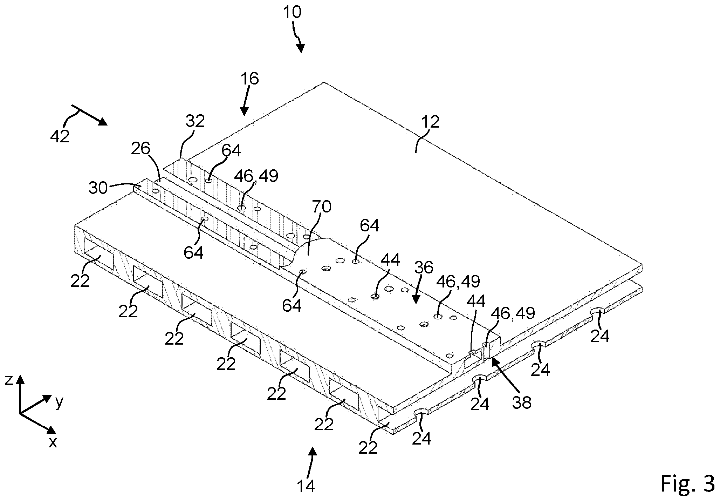

Der Flächensauggreifer 10 weist ferner eine der Anzahl von Saugstellengruppen 20 entsprechende Anzahl von Saugkammern 22 auf, wobei jeder Saugkammer 22 eine Saugstellengruppe 20 zugeordnet ist (vgl. Figur 3). Die Saugkammern 22 sind durch periodisch zueinander beabstandete Hohlräume in dem Greifergrundkörper 12 gebildet, welche sich in einer Richtung quer zu der Längserstreckung des Greifergrundkörpers 12 (also in den Figuren in Y-Richtung) erstrecken.

Die Saugstellen 18 einer jeweiligen Saugstellengruppe 20 münden über entsprechende Bohrungen 24 des Greifergrundkörpers 12 in die jeweilige Saugkammer 22 ein, sie sind demnach über die jeweilige Saugkammer 22 miteinander strömungsverbunden und können über diese gemeinsam mit Unterdruck beaufschlagt werden (vgl. Figur 3) .

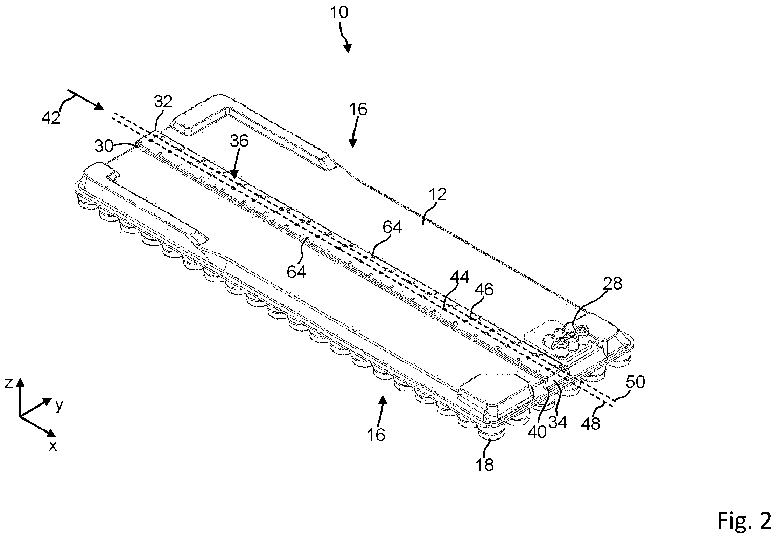

Die Saugkammern 22 sind ihrerseits über eine Verteilerkammer 26 mit Unterdruck beaufschlagbar, wobei die Verteilerkammer 26 wiederum über einen oder mehrere Unterdruckanschlüsse 28 mit einer Unterdruckerzeugungseinrichtung (nicht dargestellt) verbindbar ist (vgl. Figuren 2 und 3).

Die Verteilerkammer 26 ist im vorliegenden Beispiel durch einen Hohlraum eines Modulgehäuses 30 eines Verteilermoduls 32 gebildet, wobei der Hohlraum endseitig mittels Verschlusskappen 34 verschlossen ist (vgl. Figuren 2 und 3). Das Verteilermodul 32 ist im vorliegenden Beispiel als von dem Greifergrundkörper 12 separat bereitgestelltes Bauteil ausgebildet und weist eine Moduloberseite 36 und eine der Moduloberseite 36 abgewandte Modulunterseite 38 auf. Die Moduloberseite 36 bildet im montierten Zustand des Verteilermoduls 32 abschnittsweise die Oberseite 16 des Greifergrundkörpers 12.

Das Verteilermodul 32 ist beispielsweise im Wesentlichen mittig bezüglich der Quererstreckung des Greifergrundkörpers 12 in einer korrespondierenden Ausnehmung 40 des Greifergrundkörpers 12 angeordnet und erstreckt sich im Wesentlichen längs zu der Längserstreckung des Greifergrundkörpers 12 entlang einer ersten Richtung 42 (in den Figuren in X-Richtung), vorzugsweise entlang der gesamten Längserstreckung des Greifergrundkörpers 12. Das Verteilermodul 32 kann aber auch außermittig, z.B. in einem Randbereich des Greifergrundkörpers 12, angeordnet sein.

Der die Verteilerkammer 26 bildende Hohlraum erstreckt sich im dargestellten Beispiel ebenfalls entlang der ersten Richtung 42. Die Verteilerkammer 26 ist insofern orthogonal zu den Saugkammern 22 orientiert (vgl. Figur 3).

Die Verteilerkammer 26 weist eine der Anzahl von Saugkammern 22 entsprechende Anzahl von Verteilerkammeröffnungen 44 zur Unterdruckversorgung der Saugkammern 22 auf, wobei im dargestellten Beispiel jeder Verteilerkammeröffnung 44 jeweils eine Saugkammeröffnung 46 einer Saugkammer 22 zugeordnet ist.

Die Verteilerkammeröffnungen 44 sind vorzugsweise als Bohrungen in der Moduloberseite 36 des Verteilermoduls 32 ausgebildet (vgl. Figur 3). Die Verteilerkammeröffnungen 44 sind beispielhaft und bevorzugt in einer entlang der ersten Richtung 42 verlaufenden geraden Reihe angeordnet (in Figur 2 durch die mit Bezugszeichen 48 bezeichnete Strichlinie angedeutet).

Die Saugkammeröffnungen 46 sind im dargestellten Beispiel ebenfalls als Bohrungen 49 in dem Verteilermodul 32 ausgebildet. Die Bohrungen 49 durchsetzen das Verteilermodul 32 von der Moduloberseite 36 bis zu der Modulunterseite 38 und münden an einem Ende in die Moduloberseite 36 und an ihrem anderen Ende in die jeweilige Saugkammer 22 ein (vgl. Figur 3).

Die Saugkammeröffnungen 46 sind ebenfalls in einer Reihe angeordnet (in Figur 2 durch die mit Bezugszeichen 50 bezeichnete Strichlinie angedeutet), wobei die Reihe der Saugkammeröffnungen 46 beispielhaft und bevorzugt zu der Reihe der Verteilerkammeröffnungen 44 parallel verläuft und in einer zu der ersten Richtung 42 orthogonalen Richtung (in den Figuren in Y-Richtung) zu dieser versetzt angeordnet ist. Die Verteilerkammeröffnungen 44 und die Saugkammeröffnungen 46 bilden folglich eine entlang der ersten Richtung 42 verlaufende Doppelreihe aus paarweise angeordneten Verteilerkammeröffnungen 44 und Saugkammeröffnungen 46 (vgl. Figuren 2 und 3).

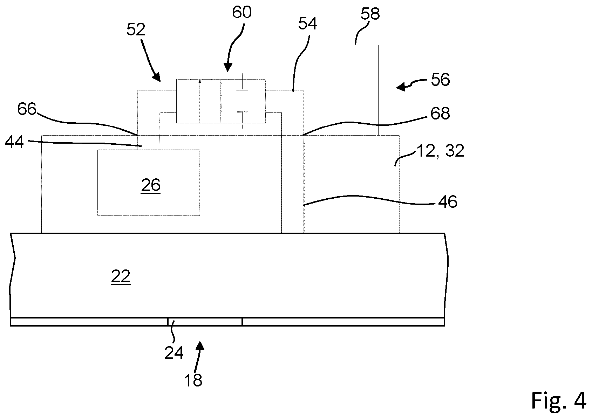

Zur Unterdruckversorgung der Saugkammern 22 ist jede Verteilerkammeröffnung 44 mit der ihr zugeordneten Saugkammeröffnung 46 über einen Verbindungskanal 52 strömungsverbunden (in Figur 4 schematisch dargestellt). Der jeweilige Verbindungskanal 52 ist durch einen Ventilkanal 54 eines jeweiligen Ventils 56 gebildet, wie nachfolgend noch näher beschrieben.

Die Ventile 56 sind als Ventilmodule 57 mit einem eigenen Ventilgehäuse 58 ausgebildet, welches den Ventilkanal 54 vollständig umschließt (vgl. Figur 4). Die Ventile 56 weisen ferner eine Sperreinrichtung 60 zum Sperren oder Freigeben des Ventilkanals 54 auf. Die Ventile 56 können z.B. als Elektromagnetventile ausgebildet sein.

Jedem Paar bestehend aus einer Verteilerkammeröffnung 44 und der dieser zugeordneten Saugkammeröffnung 46 ist jeweils ein Ventil 56 zugeordnet. Zu diesem Zweck sind die Ventilmodule 57 - entlang der Doppelreihe aus Verteilerkammeröffnungen 44 und Saugkammeröffnungen 46 - als Ventilreihe an der Moduloberseite 36 des Verteilermoduls 32 angeordnet und dort lösbar fixiert (vgl. Figur 1). In dem vorliegenden Beispiel sind die Ventilmodule 57 über ihr jeweiliges Ventilgehäuse 58 mittels Befestigungsschrauben 62 mit dem Verteilermodul 32 verschraubt. Zu diesem Zweck weist das Modulgehäuse 30 des Verteilermoduls 32 eine Mehrzahl von Schraubenbohrungen 64 zur Aufnahme der Befestigungsschrauben 62 auf (vgl. Figuren 2 und 3). Alternativ oder zusätzlich können die Ventilmodule 57 auch über eine Steckverbindung mit dem Verteilermodul 32 lösbar verbunden sein.

Die Ventilmodule 57 sind derart angeordnet, dass der jeweilige Ventilkanal 54 mit seiner ersten Öffnung 66 mit der jeweiligen Verteilerkammeröffnung 44 und mit seiner zweiten Öffnung 68 mit der jeweiligen Saugkammeröffnung 46 strömungsverbunden ist. Insbesondere ist der Ventilkanal 54 mit der Verteilerkammeröffnung 44 und der Saugkammeröffnung 46 direkt verbunden, also ohne dass weitere Bauteile (bspw. Schlauchverbindungen) zur Strömungsverbindung der Verteilerkammeröffnung 44 bzw. der Saugkammeröffnung 46 mit dem Ventilkanal 54 vorgesehen sind. Insofern ist eine jeweilige Verteilerkammeröffnung 44 mit der ihr zugeordneten Saugkammeröffnung 46 ausschließlich über den Ventilkanal 54 des Ventils 56 strömungsverbunden, der Verbindungskanal 52 ist also vollständig von dem Ventilkanal 54 des jeweiligen Ventils 56 bereitgestellt. Durch Fixieren des Ventilmoduls 57 wird insofern auch die Strömungsverbindung zwischen der jeweiligen Verteilerkammeröffnung 44 und der zugeordneten Saugkammeröffnung 46 hergestellt.

Das Modulgehäuse 30 kann auch insgesamt einstückig mit dem Greifergrundkörper 12 ausgebildet (in Figur 3 angedeutet) sein. Die Verteilerkammer 26 ist dann insbesondere als nutförmige Ausnehmung in der Oberseite des Greifergrundkörpers 12 ausgebildet, wobei die Ausnehmung von einer Deckelplatte 70 (vgl. Figur 3) verschlossen ist. Die Verteilerkammeröffnungen 44 sind dann als Bohrungen in der Deckelplatte 70 ausgebildet.

Die Deckelplatte 70 kann als von dem Greifergrundkörper 12 separat bereitgestelltes Bauteil ausgebildet sein. Dann kann die Deckelplatte 70 mit dem Greifergrundkörper 12 lösbar verbunden sein, bspw. verschraubt. Es ist auch möglich, dass die Deckelplatte 70, wie in Figur 3 angedeutet, einstückig mit dem Greifergrundkörper 12 ausgebildet ist. In diesem Fall ist die Verteilerkammer 26 also als Hohlraum in dem Greifergrundkörper 12 ausgebildet. Die Verteilerkammeröffnungen 44 und die Saugkammeröffnungen 46 sind dann insbesondere als Bohrungen in der Oberseite 16 des Greifergrundkörpers 12 ausgebildet, wobei die Bohrungen in die Verteilerkammer 26 bzw. die Saugkammern 22 einmünden. Ein solcher Greifergrundkörper 12 kann bspw. mittels eines generativen Verfahrens (z.B. 3D-Druck) hergestellt sein.

Im Falle einer einstückigen Ausgestaltung des Greifergrundkörpers 12 sind die Ventilmodule 57 an der Deckelplatte 70 des Greifergrundkörpers 12 angeordnet.

## Patentansprüche

1. Flächensauggreifer (10) zum Ansaugen und Handhaben von Gegenständen, umfassend
- einen Greifergrundkörper (12) mit einer Saugseite (14) und einer Oberseite (16), welche der Saugseite (14) abgewandt ist, wobei die Saugseite (14) eine Vielzahl von Saugstellen (18) aufweist und wobei jeweils eine festgelegte Anzahl von Saugstellen (18) zu einer Saugstellengruppe (20) zusammengefasst ist,
- eine der Anzahl von Saugstellengruppen (20) entsprechende Anzahl von Saugkammern (22), wobei jeder Saugkammer (22) eine Saugstellengruppe (20) zugeordnet ist und wobei die Saugstellen (18) der jeweiligen Saugstellengruppe (20) in die jeweilige Saugkammer (22) einmünden,
- eine Verteilerkammer (26), wobei die Verteilerkammer (26) wenigstens eine der Anzahl von Saugkammern (22) entsprechende Anzahl von Verteilerkammeröffnungen (44) zur Unterdruckversorgung der Saugkammern (22) aufweist, wobei eine Verteilerkammeröffnung (44) jeweils einer Saugkammer (22) zugeordnet ist und mit einer jeweiligen Saugkammeröffnung (46) der ihr zugeordneten Saugkammer (22) strömungsverbunden ist,
- eine Mehrzahl von Ventilen (56), wobei jeder Saugstellengruppe (20) ein Ventil (56) zugeordnet ist, wobei jedes Ventil (56) einen Ventilkanal (54) und eine Sperreinrichtung (60) zum Sperren oder Freigeben des Ventilkanals (54) aufweist, und wobei das jeweilige Ventil (56) als Ventilmodul (57) mit einem eigenen Ventilgehäuse (58) ausgebildet ist und dass das Ventilgehäuse (58) an der Oberseite (16) des Greifergrundkörpers (12) anordenbar ist, **dadurch gekennzeichnet, dass** die Verteilerkammeröffnungen (44) und die Saugkammeröffnungen (46) separat voneinander in die Oberseite (16) des Greifergrundkörpers (12) einmünden, und wobei die Verteilerkammeröffnung (44) und die Saugkammeröffnung (46) derart gruppiert an der Oberseite (16) angeordnet sind, dass eine jeweilige Verteilerkammeröffnung (44) mit der ihr zugeordneten Saugkammeröffnung (46) über einen Verbindungskanal (52) strömungsverbunden ist, welcher von dem Ventilkanal (54) des jeweiligen Ventilmoduls (57) gebildet ist.

2. Flächensauggreifer (10) nach Anspruch 1, wobei ein jeweiliger Verbindungskanal (52) schlauchlos ausgebildet ist.

3. Flächensauggreifer (10) nach Anspruch 1 oder 2, wobei das Ventilgehäuse (58) den Ventilkanal (54) und die Sperreinrichtung (60) vollständig umschließt.

4. Flächensauggreifer (10) nach einem der vorherigen Ansprüche, wobei das Ventilmodul (57) an der Oberseite (16) des Greifergrundkörpers (12) lösbar befestigbar ist.

5. Flächensauggreifer (10) nach einem der vorherigen Ansprüche, wobei die Verteilerkammeröffnungen (44) in einer Reihe (48) angeordnet sind, wobei die Reihe (48) entlang einer ersten Richtung (42) verläuft, insbesondere gerade verläuft, und wobei die Saugkammeröffnungen (46) ebenfalls in einer Reihe (50) angeordnet sind, welche Reihe (50) zu der Reihe (48) der Verteilerkammeröffnungen (44) versetzt verläuft, insbesondere parallel verläuft, wobei die erste Richtung (42) vorzugsweise längs oder quer zu einer Längserstreckung des Greifergrundkörpers (12) orientiert ist.

6. Flächensauggreifer (10) nach Anspruch 5, wobei sich die Verteilerkammer (26) entlang der ersten Richtung (42) erstreckt und wobei sich die Saugkammern (22) jeweils entlang einer Richtung erstrecken, welche zu der ersten Richtung (42) orthogonal orientiert ist.

7. Flächensauggreifer (10) nach einem der vorherigen Ansprüche, wobei die Verteilerkammer (26) und/oder die Saugkammern (22) in den Greifergrundkörper (12) integriert sind, insbesondere von dem Greifergrundkörper (12) umgrenzt sind.

8. Flächensauggreifer (10) nach Anspruch 7, wobei die jeweilige Verteilerkammeröffnung (44) und/oder die jeweilige Saugkammeröffnung (46) als Durchbruch oder Bohrung in dem Greifergrundkörper (12) ausgebildet sind/ist, insbesondere als Durchbruch oder Bohrung in der Oberseite (16).

9. Flächensauggreifer (10) nach einem der Ansprüche 7 oder 8, wobei die Verteilerkammer (26) als nutförmige Ausnehmung in der Oberseite (16) des Greifergrundkörpers (12) ausgebildet ist, welche von einer Deckelplatte (70) verschlossen ist.

10. Flächensauggreifer (10) nach einem der Ansprüche 1 bis 6, wobei die Verteilerkammer (26) durch einen Hohlraum eines von dem Greifergrundkörper (12) separaten Verteilermoduls (32) gebildet ist, welches an der der Oberseite (16) des Greifergrundkörpers (12) anordenbar, insbesondere befestigbar, ist.

11. Flächensauggreifer (10) nach Anspruch 10, wobei das Verteilermodul (32) eine Modulunterseite (38) und eine Moduloberseite (36) aufweist, wobei die Moduloberseite (36) im montierten Zustand des Verteilermoduls (32) zumindest abschnittsweise die Oberseite (16) des Greifergrundkörpers (12) bildet und wobei das Verteilermodul (32) eine der Anzahl von Saugkammern (22) entsprechende Anzahl von das Verteilermodul (32) von der Modulunterseite (38) bis zu der Moduloberseite (36) durchsetzenden Durchbrüchen (49) oder Bohrungen aufweist, welche dazu ausgebildet sind, im montierten Zustand des Verteilermoduls (32) die Saugkammeröffnungen (46) zu bilden.

12. Flächensauggreifer (10) nach einem der vorherigen Ansprüche, wobei das jeweilige Ventil (56) als Elektromagnetventil ausgebildet ist.

## Claims

1. A vacuum gripper (10) for suctioning and handling objects, comprising
- a gripper base body (12) having a suction side (14) and an upper side (16) which faces away from the suction side (14), the suction side (14) having a plurality of suction points (18) and in each case a fixed number of suction points (18) being combined to form a suction point group (20),
- a number of suction chambers (22) corresponding to the number of suction point groups (20), each suction chamber (22) being assigned a suction point group (20) and the suction points (18) of the respective suction point group (20) opening into the respective suction chamber (22),
- a distributor chamber (26), the distributor chamber (26) having at least a number of distributor chamber openings (44) corresponding to the number of suction chambers (22) for supplying negative pressure to the suction chambers (22), one distributor chamber opening (44) being assigned to one suction chamber (22) respectively and being flow-connected to a respective suction chamber opening (46) of the suction chamber (22) assigned thereto,
- a plurality of valves (56), one valve (56) being assigned to each suction point group (20), each valve (56) having a valve channel (54) and a blocking device (60) for blocking or unblocking the valve channel (54),
and wherein the respective valve (56) is designed as a valve module (57) having its own valve housing (58) and in that the valve housing (58) can be arranged on the upper side (16) of the gripper base body (12), **characterized in that** the distributor chamber openings (44) and the suction chamber openings (46) are opening into the upper side (16) of the gripper base body (12) separately from one another, and the distributor chamber opening (44) and the suction chamber opening (46) being arranged in groups on the upper side (16) such that a respective distributor chamber opening (44) is flow-connected to the suction chamber opening (46) assigned thereto via a connecting channel (52), which is formed by the valve channel (54) of the respective valve module (57) .

2. The vacuum gripper (10) according to claim 1, wherein a respective connecting channel (52) is formed tubeless.

3. The vacuum gripper (10) according to claim 1 or 2, wherein the valve housing (58) completely encloses the valve channel (54) and the blocking device (60).

4. The vacuum gripper (10) according to any one of the preceding claims, wherein the valve module (57) is releasably attachable on the upper side (16) of the gripper base body (12).

5. The vacuum gripper (10) according to any one of the preceding claims, wherein the distributor chamber openings (44) are arranged in a row (48), wherein the row (48) runs along a first direction (42), in particular straight, and wherein the suction chamber openings (46) are also arranged in a row (50), which row (50) is offset, in particular parallel offset, with respect to the row (48) of the distributor chamber openings (44), wherein the first direction (42) is preferably oriented along or oblique with respect to a longitudinal extension of the gripper base body (12).

6. The vacuum gripper (10) according to claim 5, wherein the distributor chamber (26) extends along the first direction (42) and wherein the suction chambers (22) each extend along a direction which is oriented orthogonally with respect to the first direction (42).

7. The vacuum gripper (10) according to any one of the preceding claims, wherein the distributor chamber (26) and/or the suction chambers (22) are integrated in the gripper base body (12), in particular are enclosed by the gripper base body (12).

8. The vacuum gripper (10) according to claim 7, wherein the respective distributor chamber opening (44) and/or the respective suction chamber opening (46) are/is designed as an opening or bore in the gripper base body (12), in particular as an opening or bore in the upper side (16).

9. The vacuum gripper (10) according to any one of claims 7 or 8, wherein the distributor chamber (26) is configured as a groove-shaped recess in the upper side (16) of the gripper base body (12) which is closed off by a cover plate (70).

10. The vacuum gripper (10) according to any one of claims 1 to 6, wherein the distributor chamber (26) is formed separately from the gripper base body (12) by a cavity of a distributor module (32), which can be arranged, in particular attached, on the upper side (16) of the gripper base body (12).

11. The vacuum gripper (10) according to claim 10, wherein the distributor module (32) has a module underside (38) and a module upper side (36), wherein the module upper side (36) in the assembled state of the distributor module (32) at least in sections forms the upper side (16) of the gripper base body (12), and wherein the distributor module (32) has a number of openings (49) or bores corresponding to the number of suction chambers (22) of the distributor module (32), which openings (49) or bores pass from the module underside (38) to the module upper side (36) and which are designed, in the assembled state of the distributor module (32), to form the suction chamber openings (46).

12. The vacuum gripper (10) according to any one of the preceding claims, wherein the respective valve (56) is designed as a solenoid valve.

## Revendications

1. Dispositif de préhension de surface (10) pour aspirer et manutentionner des objets comprenant:
- un corps de préhenseur (12) ayant un côté aspirant (14) et un dessus (16) à l'opposé du côté aspirant (14), le côté aspirant (14) ayant plusieurs points aspirants (18), et un nombre fixe, respectif de points aspirants (18) est regroupé en un groupe de points aspirants (20),
- un nombre de chambres à dépression (22) correspondant au nombre de groupes de points aspirants (20), un groupe de points aspirants (20) associé à chaque chambre à dépression (22), et les points aspirants (18) du groupe respectif (20) de points aspirants débouchent dans la chambre à dépression (22) correspondante,
- une chambre distributrice (26), cette chambre distributrice (26) ayant au moins un nombre d'orifices de chambre distributrice (44) correspondant au nombre de chambres à dépression (22) pour alimenter en dépression, les chambres à dépression (22), un orifice de chambre à dépression (44) étant associé respectivement à une chambre à dépression (22) qui, elle, est en liaison fluidique avec un orifice (46) de la chambre à dépression (22) associée,
- un ensemble de vannes (56), une vanne (56) étant associée à chaque groupe de points aspirants (20), chaque vanne (56) comportant un canal de vanne (54) et une installation de fermeture (60) pour fermer ou libérer le canal de vanne (54), et la vanne (56) respective est réalisée sous la forme d'un module de vanne (57) avec son propre corps de vanne (58) et ce corps de vanne (58) est sur le côté supérieur (16) du corps de préhenseur (12),
dispositif **caractérisé en ce que** les orifices de chambre de distribution (44) et les orifices de chambre à dépression (46) débouchent séparément les uns des autres dans le côté supérieur (16) du corps de préhenseur (12), l'orifice de chambre distributrice (44) et l'orifice de chambre à dépression (46) étant groupés sur le dessus (16) pour qu'un orifice de chambre distributrice (44) respectif soit relié par une liaison fluidique avec l'orifice de chambre à dépression (46) associé, par un canal de liaison (52) formé par le canal de vanne (54) du module de vanne (57) respectif.

2. Dispositif de préhension de surface (10) selon la revendication 1, selon lequel le canal de liaison (52) respectif est sans tuyau.

3. Dispositif de préhension de surface (10) selon la revendication 1 ou 2, selon lequel le corps de vanne (58) entoure complètement le canal de vanne (54) et l'installation de fermeture (60).

4. Dispositif de préhension de surface (10) selon l'une des revendications précédentes, selon lequel le module de vanne (57) est fixé de manière amovible au dessus (16) du corps de préhenseur (12).

5. Dispositif de préhension de surface (10) selon l'une des revendications précédentes, selon lequel les orifices de chambre distributrice (44) sont répartis en une rangée (48), cette rangée (48) étant dirigée selon une première direction (42), notamment une direction droite, et les orifices de chambre à dépression (46) sont également répartis selon une rangée (50), cette rangée (50) étant décalée par rapport à la rangée (48) des orifices de chambre distributrice (44), notamment de façon parallèle, la première direction (42) étant orientée de préférence longitudinalement ou transversalement par rapport à l'extension longitudinale du corps de préhenseur (12).

6. Dispositif de préhension de surface (10) selon la revendication 5, selon lequel la chambre distributrice (26) s'étend le long de la première direction (42), et la chambre à dépression (22) s'étend respectivement selon la direction orthogonale à la première direction (42).

7. Dispositif de préhension de surface (10) selon l'une des revendications précédentes, selon lequel la chambre distributrice (26) et/ou les chambres à dépression (22) sont intégrées dans le corps de préhenseur (12), en particulier elles sont délimitées par le corps de préhenseur (12).

8. Dispositif de préhension de surface (10) selon la revendication 7, selon lequel l'orifice de chambre distributrice (44) respectif et/ou l'orifice de chambre à dépression (46) respectif est un passage ou un perçage dans le corps de préhenseur (12), en particulier un passage ou un perçage dans le dessus (16).

9. Dispositif de préhension de surface (10) selon l'une des revendications 7 ou 8, selon lequel la chambre distributrice (26) est réalisée sous la forme d'un évidement en rainure dans le dessus (16) du corps de préhenseur (12) en étant fermé par une plaque de couverture (70).

10. Dispositif de préhension de surface (10) selon l'une des revendications 1 à 6, selon lequel la chambre distributrice (26) est formée par un module de distributeur (32) distinct du corps de préhenseur (12) et qui est sur le dessus (16) du corps de préhenseur (12), notamment fixé à celui-ci.

11. Dispositif de préhension de surface (10) selon la revendication 10, selon lequel le module distributeur (32) a un dessous de module (38) et un dessus de module (36), le dessus de module (36) à l'état installé du module distributeur (32) formant au moins par segment, le dessus (16) du corps de préhenseur (12), et le module de distributeur (32) ayant un nombre de chambres à dépression (22) correspondant au nombre de passages ou perçages (49) traversant le module distributeur (32) à partir du dessous de module (38) jusqu'au dessus de module (36), ces passages ou perçages étant réalisés pour qu'à l'état monté du module distributeur (32), ils forment les orifices de chambre à dépression (46).

12. Dispositif de préhension de surface (10) selon l'une des revendications précédentes, selon lequel la vanne (56) respective est réalisée sous la forme d'une électrovanne.
